# EUROPÄISCHE PATENTSCHRIFT

(11) **EP 2 365 601 B1**
(45) Veröffentlichungstag und Bekanntmachung des Hinweises auf die Patenterteilung: **01.01.2020**
(21) Anmeldenummer: 11155787.2
(22) Anmeldetag: 24.02.2011
(51) Int. Cl.: H02J 50/12, H01F 38/14

(54) **Verfahren zur Kompensation von Systemtoleranzen in induktiven Kopplern**
Method for compensating for system tolerances in inductive couplers
Procédé de compensation de tolérances de système dans des coupleurs inductifs

(30) Priorität: 10.03.2010 DE 102010015906
(43) Veröffentlichungstag der Anmeldung: 14.09.2011
(73) Patentinhaber: Schleifring GmbH, 82256 Fürstenfeldbruck (DE)
(72) Erfinder: Zimpfer, Arno, 82291 Mammendorf (DE); Fischer, Stefan, 78048 Villingen-Schwenningen (DE); Krumme, Nils, 82340 Feldafing (DE)
(74) Vertreter: Lohr, Jöstingmeier & Partner

(56) Entgegenhaltungen:
- EP-A1- 0 337 171
- EP-A2- 1 022 840
- EP-A2- 2 151 906
- WO-A1-2005/064625
- WO-A1-2007/054259
- WO-A2-2008/055664
- US-A- 4 209 783
- US-A- 4 792 965

## Beschreibung

### Technisches Gebiet

Die Erfindung bezieht sich auf induktive Koppler zur kontaktlosen Leistungsübertragung insbesondere für Computertomographen. Durch diese wird die überwiegend zum Betrieb der Röntgenröhre notwendige elektrische Leistung von der stationären Seite zur rotierenden Seite der Gantry eines Computertomographen übertragen. Die Übertragung erfolgt hier berührungslos mittels eines induktiven Drehübertragers, welcher ähnlich wie ein Transformator aufgebaut ist, bei dem die Primärseite und Sekundärseite gegeneinander drehbar sind.

### Stand der Technik

Bei gegeneinander beweglichen Einheiten, wie Radaranlagen oder auch Computertomographen, ebenso wie bei linear beweglichen Einheiten wie Krananlagen oder Förderfahrzeugen ist es häufig notwendig, elektrische Energie zwischen beweglichen Einheiten zu übertragen. Um diese Energie berührungslos zu übertragen, werden bevorzugt induktive Koppler eingesetzt. Diese haben gegenüber mechanischen Schleifbahnen oder auch Schleifringen den Vorteil dass Abrieb, Verschleiß, mechanischer Kraftaufwand zur Bewegung des Kopplers und auch der Wartungsaufwand wesentlich geringer sind. Der Begriff eines induktiven Kopplers bezieht sich hier auf eine Schaltung zur Erzeugung einer Wechselspannung zusammen mit einem induktiven Übertrager beziehungsweise Drehübertrager zur Energieübertragung zwischen zwei gegeneinander beweglichen und insbesondere drehbaren Teilen.

Induktive Drehübertrager, wie sie beispielsweise in der US 7,197,113 offenbart sind, haben magnetische Kerne aus Eisen- oder Ferritmaterial und wenigstens eine Wicklung auf jeder Seite der gegeneinander drehbaren Einheiten. In eine erste Wicklung wird ein Wechselstrom eingespeist und über eine zweite, gegenüber dieser beweglichen Wicklung wieder abgegriffen.

Die US 7,054,411, WO 2007/054259 A1 und WO 2008/055664 A2 zeigen eine vollständige Schaltung eines induktiven Leistungsübertragungssystems für Computertomographen mit der zugehörigen Leistungselektronik.

Bei galvanisch gekoppelten Schleifringen ist es einfach, eine vordefinierte Spannung von der Statorseite auf die Rotorseite zu übertragen. Es müssen hier nur die relativ geringen ohmschen Verluste berücksichtigt werden. Bei induktiven Drehübertragern spielt die Streuinduktivität des Drehübertragers eine wesentliche Rolle. Sie stellt eine frequenzabhängige Impedanz dar, die die Übertragungseigenschaften des Drehübertragers wesentlich beeinflusst. Diese Streuinduktivität hängt von verschiedenen Faktoren, wie der Induktivität der Wicklungen der Statorseite und der Rotorseite sowie vom magnetischen Aufbau ab. Um nun elektrische Energie über einen solchen Drehübertrager zu übertragen, wird zur Kompensation eine Serienkapazität in Reihe geschaltet. Hierdurch ergibt sich ein Serienresonanzkreis. Dieser hat bei seiner Resonanzfrequenz eine Impedanz von Null und ermöglicht hier die Übertragung großer Leistungen. Zur Steuerung des Leistungsflusses kann die Arbeitsfrequenz von der Resonanzfrequenz abweichend gewählt werden.

Statt eines Serienresonanzkreises kann durch Parallelschalten einer Kapazität auch ein Parallelresonanzkreis aufgebaut werden. Die im Folgenden beschriebenen Eigenschaften treffen ebenso auf einen Parallelresonanzkreis zu. Der Resonanzkreis hat bei seiner Resonanzfrequenz eine Impedanz von beinahe Null und ermöglicht hier die Übertragung großer Leistungen. Durch eine Änderung der Impedanz, welche durch eine Änderung der Schaltfrequenz herbeigeführt wird, kann die Ausgangsspannung gesteuert werden.

Die Induktivitäten in einem Resonanzkreis stellen frequenzabhängige Impedanzen dar, die die Übertragungseigenschaften des Drehübertragers wesentlich beeinflussen. Diese Induktivitäten hängen von verschiedenen Faktoren, wie dem Aufbau und der Permeabilität des magnetischen Kreises, dem Aufbau der Wicklung und insbesondere vom Luftspalt zwischen der Statorseite und der Rotorseite ab. Diese Faktoren sind in der Serienfertigung nicht konstant, sondern unterliegen bestimmten Toleranzen. Um die Ausgangsspannung auf der rotierenden Seite für sämtliche in der Serie auftretenden Werte der maßgeblich beteiligten Bauelemente - insbesondere des Resonanzkondensators, des Anpasstransformators und des induktiven Drehübertragers - innerhalb zulässiger Grenzen zu halten sind verschiedene Maßnahmen bekannt. Eine Möglichkeit ist, die Ausgangsspannung zu messen und diesen Messwert auf die stationäre Seite zurückzuführen. Hierzu wird aber ein Drehübertrager benötigt, der zusätzliche Kosten verursacht und Platz benötigt.

Eine andere Möglichkeit ist, auf der rotierenden Seite eine zusätzliche Wandlerstufe, meist ein DC-DC Wandler, zwischen Sekundärseite des rotierenden Transformators und Ausgang einzubauen. Für diese Wandlerstufen werden häufig Tief- oder Hochsetzsteller verwendet, aber auch andere Wandler, wie Zeta- oder Cuk- Wandler sind möglich. Die Eingangsspannung dieser nachgeschalteten Wandlerstufe kann in einem großen Bereich schwanken, wobei die Ausgangsspannung konstant gehalten wird. Diese Lösung benötigt aber auf der rotierenden Seite einen zusätzlichen Wandler, der die Kosten und auch Gewicht sowie Volumen der Anordnung erhöht.

### Darstellung der Erfindung

Der Erfindung liegt die Aufgabe zu Grunde, einen induktiven Koppler, insbesondere einem induktiven Drehübertrager derart auszugestalten, dass durch eine primärseitige Steuerung die Ausgangsspannung unabhängig von mechanische und elektrische Toleranzen der elektrischen Bauteile näherungsweise konstant gehalten werden kann. Ein weiterer Aspekt der Erfindung ist ein Verfahren, um die Ausgangspannung eines induktiven Kopplers unabhängig von mechanischen und elektrischen Toleranzen der elektrischen Bauteile konstant zu halten. Weiterhin soll entsprechend der Erfindung kein Drehübertrager zur Übertragung von Rückkopplung- oder Steuersignalen von der Sekundärseite zur Primärseite zur Übertragung von Messwerten der Ausgangspannung auf der Sekundärseite notwendig sein.

Diese Aufgabe wird durch eine Vorrichtung nach Anspruch 1 gelöst. Vorteilhafte Ausgestaltungen der Erfindung sind in den Unteransprüchen angegeben.

Das erfindungsgemäße Verfahren wird bei einem induktiven Drehübertrager eingesetzt. Der induktive Drehübertrager umfasst einen Leistungsgenerator zur Erzeugung einer gepulsten Gleichspannung oder einer Wechselspannung. Weiterhin umfasst sie einen induktiven Leistungsübertrager, bei dem die Primärseite und die Sekundärseite gegeneinander beweglich sind. Dieser Leistungsübertrager weist eine Primärseite mit wenigstens einer Primärwicklung und eine Sekundärseite mit wenigstens einer Sekundärwicklung auf. Weiterhin ist in Serie zur Primärwicklung eine Kapazität, vorzugsweise in Form eines Resonanzkondensators geschaltet, so dass sich ein Serienresonanzkreis ergibt. Die gepulste Gleichspannung bzw. Wechselspannung des Leistungsgenerators wird zur Leistungsübertragung in diesen Serienresonanzkreis eingespeist, so dass in der Primärwicklung ein wechselndes Magnetfeld entsteht. Dieses induziert in der Sekundärwicklung wiederum einen Strom, welcher in eine Last eingespeist wird. Zur besseren Verkopplung zwischen Primärwicklung und Sekundärwicklung sind Bauteile mit weich magnetischen Materialien, vorzugsweise Eisen- oder Ferritbauteile vorgesehen. Optional kann zwischen dem Leistungsgenerator und dem induktiven Leistungsübertrager noch ein Anpasstransformator vorgesehen sein. Zur Durchführung und Kontrolle des Verfahrens ist bevorzugt eine Steuereinrichtung vorhanden.

Das erfindungsgemäße Verfahren umfasst 3 Abschnitte, welche jeweils in mehrere Schritte a, b, c, d, e, f, g untergliedert werden können. Die beiden ersten Abschnitte betreffen unterschiedliche Messungen von Resonanzfrequenzen, während der dritte Abschnitt die Auswertung der Messergebnisse betrifft.

Der erste Abschnitt umfasst die Schritte:
a) Erzeugen einer kurzen Sequenz aus mindestens einem Puls einer Gleichspannung oder einer Periode einer Wechselspannung, wobei durch den Gleichrichter (81) ein Strom in den Ladekondensator (82) eingebracht und dieser dadurch aufgeladen wird;
b) Kurzschließen des Serienresonanzkreises;
c) Messung der Frequenz der sich im Serienresonanzkreis ergebenden Schwingung mit einer ersten Frequenz;

Der zweite Abschnitt umfasst die Schritte:
d) Erzeugung einer längeren Sequenz mit mehreren Pulsen einer Gleichspannung oder mehreren Perioden einer Wechselspannung, kleiner als die Spannung des Ladekondensators, wobei eine oder mehrere Gleichrichterdioden der Gleichrichterschaltung (81) dauerhaft in einem gesperrten Zustand bleiben und somit kein Resonanzstrom mehr durch den ausgangsseitigen Kreis aus der Sekundärwicklung des induktiven Drehübertragers fließt;
e) Kurzschließen des Serienresonanzkreises;
f) Messung der Frequenz der sich im Serienresonanzkreis ergebenden Schwingung mit einer zweiten Frequenz;

Der dritte Abschnitt umfasst den Schritt:
g) Ermittlung eines Steuerparameters zur Steuerung des Leistungsgenerators durch Berechnung, Abschätzung oder anhand einer Wertetabelle aus den in den Schritten c und f gemessenen Frequenzen, wobei durch eine primärseitige Steuerung des Leistungsgenerators die Ausgangsspannung unabhängig von mechanischen und elektrischen Toleranzen der elektrischen Bauteile näherungsweise konstant gehalten werden kann.

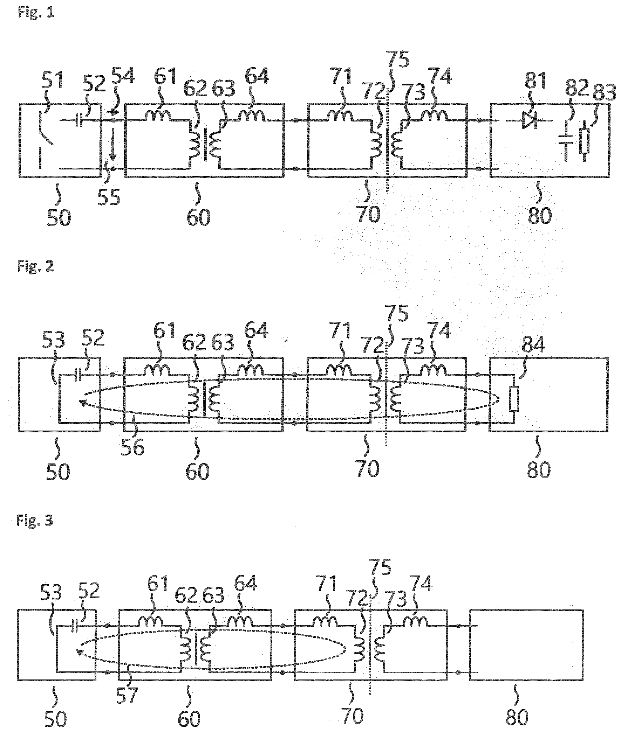

In dem ersten Abschnitt wird durch den Leistungsgenerator eine kurze Sequenz aus mindestens einem Puls einer Gleichspannung oder aus mindestens einer Periode einer Wechselspannung in den Resonanzkreis eingespeist. Die Sequenz umfasst vorzugsweise weniger als 10, besonders bevorzugt nur einen Puls oder eine Periode. Im nächsten Schritt wird der Serienresonanzkreis kurzgeschlossen. Dadurch schwingt dieser auf einer ersten Resonanzfrequenz. In einem dritten Schritt wird diese Resonanzfrequenz gemessen. Diese erste Resonanzfrequenz wird bestimmt durch den Resonanzkondensator sowie die in dieser Serienresonanz aktiven Induktivitäten. Gemäß dem Ersatzschaltbild nach Figur 2 sind dies überwiegend die erste Serieninduktivität und die zweite Serieninduktivität des induktiven Drehübertragers. Für den Fall, dass zwischen dem Leistungsgenerator und dem induktiven Leistungsübertrager noch ein Anpasstransformator geschaltet ist, fließen auch noch dessen erste Serieninduktivität und zweite Serieninduktivität in die Resonanzfrequenz mit ein.

In einem zweiten Abschnitt wird durch den Leistungsgenerator eine längere Sequenz mit mehreren Pulsen einer Gleichspannung oder mit mehreren Perioden einer Wechselspannung erzeugt. Durch diese längere Sequenz wird ein bestimmter Energiebetrag an die Sekundärseite abgegeben, bei der ein entsprechender Ladekondensator hinter einer Gleichrichterschaltung aufgeladen wird. Der Ladekondensator wird bevorzugt mit einer Spannung kleiner als der Nennspannung aufgeladen, so dass die Schaltung an der Last, beispielsweise eine Röntgenquelle noch nicht aktiviert wird. Danach wird wiederum der Serienresonanzkreis kurzgeschlossen. Es wird im nächsten Schritt eine zweite Resonanzfrequenz gemessen. Diese zweite Resonanzfrequenz wird nun durch andere Bauelemente bestimmt als die erste Resonanzfrequenz. Durch die Aufladung des Ladekondensators sind nun die Gleichrichterdioden in Sperrrichtung gepolt, solange der Serienresonanzkreis nur eine geringe Schwingungsamplitude hat. Dadurch ist der Stromkreis mit der Last von der übrigen Schaltung entkoppelt. Somit trägt, wie in Figur 3 dargestellt die Sekundärseite des induktiven Leistungsübertragers nicht zur Serienresonanz bei. Diese wird ausschließlich durch die erste Serieninduktivität und die erste Parallelinduktivität des Drehübertragers und gegebenenfalls durch die erste Serieninduktivität und die zweite Serieninduktivität des Anpasstransformators bestimmt. Da grundsätzlich die erste Parallelinduktivität der Primärwicklung des Drehübertragers wesentlich größer als die zweite Serieninduktivität ist, ergibt sich nun aus der Summe der ersten Serieninduktivität und der ersten Parallelinduktivität des Drehübertragers eine wesentlich höhere Induktivität als im ersten Abschnitt aus der Summe der ersten Serieninduktivität und der zweiten Serieninduktivität des Drehübertragers. Folglich ist die zweite Resonanzfrequenz deutlich niedriger als die erste Resonanzfrequenz. Die Induktivitäten des induktiven Drehübertragers sind sehr stark vom Luftspalt des rotierenden Drehübertragers abhängig und variieren schon bei relativ kleinen Luftspalttoleranzen erheblich.

In einem dritten Abschnitt erfolgt nun die Ermittlung wenigstens eines Werts für eine Steuergröße zur Steuerung der Primärseite, mit welcher die Ausgangspannung eingestellt werden kann. Dies kann durch Berechnung, Abschätzung oder durch auslesen einer Wertetabelle erfolgen. Bevorzugt wird als Steuergröße die Arbeitsfrequenz des Leistungsgenerators ermittelt. Alternativ beziehungsweise zusätzlich kann auch eine Eingangsspannung für den Leistungsgenerator (eine Zwischenkreisspannung) eingestellt werden, wie sie beispielsweise durch einen vorgestellten Wandler beziehungsweise eine Leistungsfaktorkorrekturschaltung erzeugt wird. Grundsätzlich kann anstelle der Steuergröße auch eine Korrekturgröße für eine interne Stellgröße einer Regelschaltung verwendet werden. Insbesondere kann somit beispielsweise durch die Korrekturgröße ein Vorgabewert für eine Generatorfrequenz oder eine Ausgangspannung korrigiert werden.

Da nun zwei unterschiedliche Messungen im ersten und im zweiten Abschnitt mit unterschiedlichen Resonanzfrequenzen durchgeführt wurden, bei denen unterschiedliche Komponenten des Leistungsübertragers einbezogen waren, lässt sich nun die Induktivität der Primärseite des Leistungsübertragers und/oder auch die Streuinduktivität des Leistungsübertragers ausrechnen, falls die übrigen Bauteilewerte, wie beispielsweise die Kapazität des Resonanzkondensators und gegebenenfalls die Induktivitäten des Anpasstransformators bekannt beziehungsweise als konstante Werte definiert sind. Durch diese Induktivität lässt sich nun auch ein optimaler Arbeitspunkt bzw. eine optimale Arbeitsfrequenz des Leistungsgenerators für die Übertragung einer vorgegebenen Leistung oder für das Erreichen einer fundierten Ausgangsspannung oder eines Ausgangsstroms auf der Ausgangsseite ermitteln.

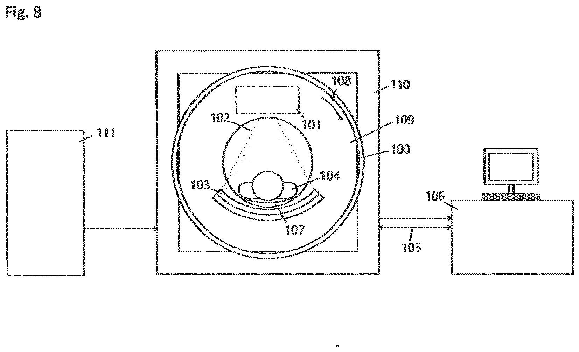

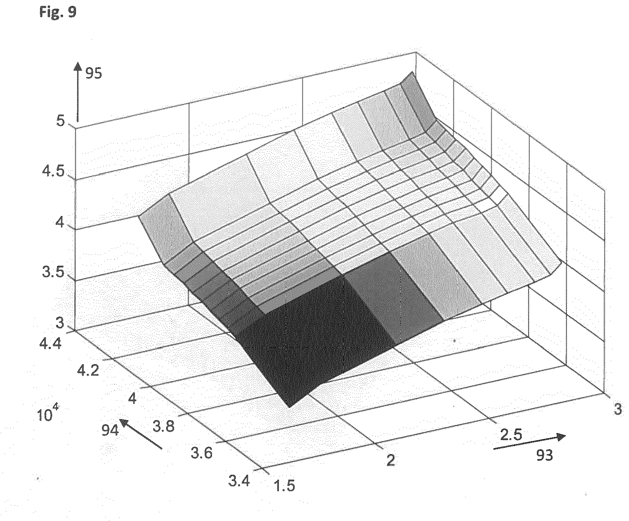

Um die Wertetabelle oder eine Formel zur Berechnung der Steuergröße zu erzeugen, kann in einer Kalibrierphase eine mehrdimensionale Wertetabelle, wie z.B. in Fig. 9 dargestellt, als Referenz aufgenommen werden. Dies geschieht durch gezielte Variation der Parameter wie z.B. Luftspalt und Resonanzkapazität, womit unterschiedliche Resonanzfrequenzen für beide Messungen eingestellt werden. Mit Einstellen des Luftspalts wird die Resonanzfrequenz, die sich für die Messung nach Abschnitt 2 ergibt, variiert, mit Variation der Resonanzkapazität oder Streuinduktivität wird die Resonanzfrequenz, die sich für die Messung nach Abschnitt 1 ergibt, variiert. Zu jedem gemessenen Frequenzpaar wird der Wert für die Steuergröße - in Fig. 8 beispielhaft die Schaltfrequenz des Wechselrichters - ermittelt, der notwendig ist, um die Ausgangsspannung auf den gewünschten Wert einzustellen. Dieses mehrdimensionale Kennlinienfeld ist z.B. im Speicher des Steuer- bzw. Regelungscontrollers hinterlegt, der Teil des Leistungsgenerators sein kann. Nachdem im Seriengerät beide Messungen durchgeführt worden sind und die beiden gemessenen Frequenzen vorliegen, kann beispielsweise aus einer Interpolation für ein beliebig gemessenes Frequenzpaar ein geeigneter Wert für die Steuergröße ermittelt werden. Alternativ kann statt des Kennlinienfelds auch eine Formel, welche den funktionellen Zusammenhang zwischen der Steuergröße und den beiden Resonanzfrequenzen beschreibt, hinterlegt und zur Ermittlung des geeigneten Werts für die Steuergröße verwendet werden.

Das beschriebene erfindungsgemäße Verfahren lässt sich nun für verschiedene Positionen zwischen den beweglichen Teilen des Leistungsübertragers, insbesondere bei verschiedenen Winkelstellungen eines Drehübertragers anwenden. So kann im Falle eines Drehübertragers eine Funktion der Induktivität bzw. der optimalen Arbeitsfrequenz in Abhängigkeit von der Winkelposition ermittelt werden. Vorteilhafterweise wird bei der Inbetriebnahme eines Computertomographen eine Initialisierungs- bzw. eine Messsequenz, bei der das erfindungsgemäße Verfahren winkelpositionsabhängig über wenigstens eine Umdrehung des rotierenden Teils der Gantry des Computertomographen durchgeführt wird.

Zur Verifikation einer Messung oder zur Erhöhung der Genauigkeit der Messung können vorteilhaft mehrere Messungen hintereinander durchgeführt werden. Die jeweils gemessenen Frequenzen können auf Plausibilität geprüft werden. So können Fehlmessungen ausgesiebt werden. Durch eine arithmetische Mittelung kann die Genauigkeit der Gesamtmessung vergrößert werden.

Sinnvollerweise wird erwartet, dass die Messwerte in einem vorher festzulegenden Bereich liegen. Dieser zulässige Bereich ergibt sich aus den maximal zulässigen Toleranzen. Liegen nun die Messwerte für eine der beiden Messverfahren außerhalb dieses zulässigen Bereichs, kann dies zu einer Fehlfunktion des Gerätes führen, beispielsweise zu einer zu geringen oder zu hohen Ausgangsspannung, welche selbst nicht direkt gemessen wird. Mit dem beschriebenen Verfahren kann diese Fehlfunktion erkannt, und ein Fehlersignal ausgegeben werden. Als Folge kann dann das Gerät abgeschaltet und z.B. eine entsprechende Servicewarnung signalisiert werden. Auf diese Weise werden unzulässig große Toleranzen der Mechanik oder elektrischen Bauelemente erkannt. Diese Toleranzen können sich zum Beispiel während der Lebensdauer, beim Betrieb außerhalb des in der Spezifikation festgelegten Bereichs oder bei Materialfehlern verändern und größer als die zulässigen Grenzwerte werden.

In einer weiteren Ausgestaltung wird anstelle des Leistungsgenerators zur Erzeugung der Sequenzen aus mindestens einem Puls einer Gleichspannung oder einer Periode einer Wechselspannung ein Hilfsgenerator eingesetzt. Dieser muss im Vergleich zum Generator, der die Last der Röntgenröhre speisen kann, eine vergleichsweise niedrige Leistung abgeben und kann entsprechend einfach dimensioniert werden. Weiterhin kann ein geeigneter Hilfsschalter zum Kurzschluss des Serienresonanzkreises vorgesehen sein.

Vorteilhafterweise können die Messungen auch unter Belastung erfolgen. Optional kann die Historie der Belastungszustände ausgewertet werden, um einen geeigneten Zeitpunkt einer Messung zu bestimmen. Während des Betriebs beziehungsweise in kurzen Unterbrechungen, in denen keine Röntgenstrahlung abgegeben wird, können die Auswirkungen des Betriebs wie beispielsweise thermische Ausdehnung aufgrund von Temperaturerhöhung erfasst und somit kompensiert werden.

Das Erfindungsgemäße Verfahren ist auch für induktive Drehübertrager mit mehreren Primärwicklungen und/oder mehreren Sekundärwicklungen anwendbar.

Ein weiterer Gegenstand der Erfindung ist eine induktive Koppeleinrichtung mit einer Steuereinrichtung zur Durchführung des oben beschriebenen Verfahrens.

Ein weiterer Gegenstand der Erfindung ist ein Computertomograph mit einer zuvor beschriebenen induktiven Koppeleinrichtung.

Die in diesem Dokument gemachten Ausführungen beziehen sich der Anschaulichkeit halber auf induktive Drehübertrager zur Energieübertragung zwischen gegeneinander drehbaren Einheiten. Dies ist auch der wesentliche Gegenstand der Erfindung. Es ist für den Fachmann jedoch klar, dass dieselben Prinzipien auch für eine berührungslose Energieübertragung zwischen beliebig gegeneinander beweglichen Einheiten, insbesondere zwischen linear beweglichen Einheiten einsetzbar sind. Es muss hier lediglich eine Anpassung der Geometrie des Drehübertragers an die Bahn und die Art der Bewegung vorgenommen werden. Das erfindungsgemäße Messverfahren ist hier genauso vorteilhaft einsetzbar.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
- Figur 1: zeigt schematisch das Ersatzschaltbild eines induktiven Drehübertragers entsprechend der Erfindung.
- Figur 2: zeigt den Stromverlauf des ersten Messvorgangs in der Schaltung.
- Figur 3: zeigt den Stromverlauf des zweiten Messvorgangs in der Schaltung.
- Figur 4: zeigt den zeitlichen Verlauf des Ausgangsstroms des Leistungsgenerators während des ersten Messvorgangs.
- Figur 5: zeigt den zeitlichen Verlauf des Ausgangsstroms des Leistungsgenerators während des zweiten Messvorgangs.
- Figur 6: zeigt schematisch den Aufbau eines erfindungsgemäßen induktiven Leistungsübertragers.
- Figur 7: zeigt schematisch den Aufbau eines nicht erfindungsgemäßen induktiven Leistungsübertragers.
- Figur 8: zeigt schematisch einen Computertomographen.
- Figur 9: zeigt beispielhaft ein 3D-Kennlinienfeld, mit welchem aus den zwei Messungen der richtige Wert für die Stellgröße (hier Schaltfrequenz) ermittelt wird.
- Figur 10: zeigt beispielhaft ein weiteres 3D-Kennlinienfeld

In Figur 1 ist schematisch das Ersatzschaltbild eines induktiven Drehübertragers entsprechend der Erfindung dargestellt. Der Leistungsgenerator 50 umfasst einen Leistungsschalter 51, welcher aus einer hier nicht dargestellten EingangsGleichspannung eine getaktete Gleichspannung oder eine Wechselspannung erzeugt. Dieser Schalter kann beispielsweise eine Halbbrücke oder auch eine Vollbrücke sein. Bevorzugt werden hier Leistungstransistoren wie FETs oder IG-BTs eingesetzt. Am Ausgang des Schalters befindet sich ein Resonanzkondensator 52, der mit den weiteren Induktivitäten der Schaltung einen Serienresonanzkreis bildet. Der Leistungsgenerator 50 liefert einen Ausgangsstrom 54 bei einer Ausgangsspannung 55 an den Anpasstransformator 60. Dieser ist wiederum mittels eines Ersatzschaltbildes dargestellt. Es umfasst die beiden magnetisch miteinander verkoppelten erste Parallelinduktivität 62 und zweite Parallelinduktivität 63 sowie die erste Serieninduktivität 61 und die zweite Serieninduktivität 64. Dieser Anpasstransformator dient zur Anpassung der Impedanz bzw. des Spannungsniveaus des Leistungsgenerators an den nachfolgenden induktiven Drehübertrager 70 bzw. die Lastschaltung 80. Der induktive Drehübertrager 70 ist auch hier durch ein Ersatzschaltbild dargestellt. Der Übertrager selbst weist eine Primärinduktivität (erste Parallelinduktivität) 72 und eine Sekundärinduktivität (zweite Parallelinduktivität) 73 auf. Diese beiden sind durch den hier schematisch dargestellten Drehspalt 75, also einen Luftspalt zwischen Rotor und Stator voneinander getrennt. Auch hier sind die erste Serieninduktivität 71 und zweite Serieninduktivität 74 vorhanden. Auf der Rotorseite des Drehübertragers ist die Lastschaltung 80 angeschlossen. Diese weist einen Gleichrichter 81 sowie einen Ladekondensator 82 und eine Last, hier symbolisiert durch den Lastwiderstand 83 auf. Der Gleichrichter 81 kann entsprechend dem Stand der Technik ein Einweggleichrichter, ein Brückengleichrichter oder bevorzugt auch ein Synchrongleichrichter sein. Die hier dargestellte Schaltung ist ein bevorzugtes Ausführungsbeispiel. Ein erfindungsgemäßer induktiver Drehübertrager beziehungsweise ein erfindungsgemäßes Verfahren arbeitet auch ohne einen Anpasstransformator 60. Dieser ist nicht zwingend notwendig, erhöht jedoch die Flexibilität bei der Dimensionierung der gesamten Anordnung erheblich. Zudem kann durch diesen eine weitere Potenzialtrennung realisiert werden. Weiterhin kann der Resonanzkondensator 52 auch an anderen Stellen der Schaltung angeordnet sein, so dass sich ein Serienresonanzkreis ergibt.

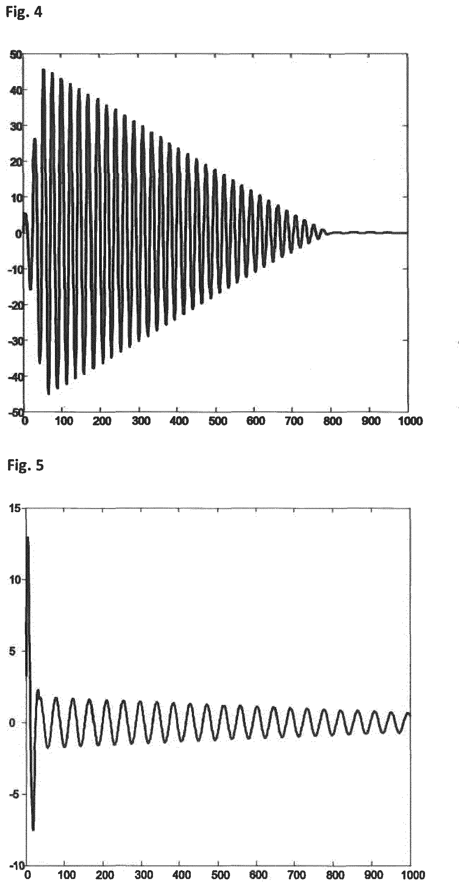

Figur 2 zeigt den ersten Messvorgang entsprechend der Erfindung. Es wird mittels des Leistungsschalters 51 ein kurzer Spannungs- bzw. Strompuls oder auch eine kurze Pulsfolge über den Resonanzkondensator 52 auf die Schaltung abgegeben. Danach wird durch den Leistungsschalter oder einen Hilfsschalter der Ausgang des Leistungsschalters kurzgeschlossen, so dass der Resonanzkreis selbst auf seiner Eigenfrequenz schwingen kann. Es ergibt sich hier ein Serienresonanzkreis aus dem Resonanzkondensator 52 und den Serieninduktivitäten 61, 64,71 und 74, der den Lastwiderstand 84 speist. Dieser Lastwiderstand entspricht meist nicht dem Lastwiderstand 83 bei Nennlast durch die Röntgenröhre, da durch die geringe übertragene Energie die Röntgenröhre noch nicht in Betrieb gesetzt werden kann. Dieser Lastwiderstand ergibt sich dadurch, dass durch den Gleichrichter 81 ein Strom in den Ladekondensator 82 eingebracht und dieser dadurch aufgeladen wird. Die zum Aufladen des Ladekondensators benötigte Energie wird dem Resonanzkreis entzogen. Es resultiert hier eine abklingende Schwingung mit einer ersten Resonanzfrequenz, wie sie in der Figur 4 dargestellt ist.

In Figur 3 ist der Stromverlauf des zweiten Messvorgangs entsprechend der Erfindung dargestellt. Zur Vorbereitung der Messung wird eine Pulsfolge definierter Länge durch den Leistungsschalter 51 erzeugt und in den Resonanzkreis des Drehübertragers eingespeist. Dadurch erhält der Ladekondensator 82 eine gewisse Ladung und somit eine bestimmte Spannung. In einem zweiten Schritt wird wieder der Ausgang des Leistungsschalters 51 mittels eines Kurzschlusses 53 kurzgeschlossen. Die Schaltung schwingt auch hier auf einer Eigenfrequenz. Da durch das vorhergehende Pulspaket der Ladekondensator 82 auf eine vorbestimmte Spannung aufgeladen wurde, wird der Gleichrichter 81 nur dann in einen leitenden Zustand versetzt, wenn die maximale Amplitude der Spannung an der Anode einer Gleichrichterdiode die Spannung an der Katode überschreitet. Bei einer Messspannung in dem Resonanzkreis kleiner als der Spannung am Ladekondensator 82 bleibt eine oder mehrere Gleichrichterdioden des Gleichrichters 81 dauerhaft in einem gesperrten Zustand. Somit fließt kein Resonanzstrom mehr durch den ausgangsseitigen Kreis aus der Sekundärwicklung des induktiven Drehübertragers und der Induktivität 74. Es wird nun die Resonanzfrequenz mit dem Resonanzkondensator 52 durch die Induktivitäten 61, 64, 71 und insbesondere durch die relativ hohe Induktivität der Primärwicklung des Drehübertragers 72 bestimmt. Da diese Induktivität im Normalfall wesentlich höher als die Induktivität 74 ist, ergibt sich hier eine deutlich niedrigere Resonanzfrequenz wie sie in der Figur 4 dargestellt ist. Aus dieser Resonanzfrequenz kann nun auf die erste Parallelinduktivität 72 der Primärwicklung des Drehübertragers geschlossen werden.

Figur 4 zeigt den Verlauf des Ausgangsstroms 54 des Leistungsgenerators während des ersten Messvorgangs als Funktion der Zeit in einer beispielhaften Anordnung wieder. Die untere waagerechte Achse gibt hier die Zeit in Mikrosekunden an und ist skaliert von 0 Mikrosekunden auf der linken Seite bis 1000 Mikrosekunden auf der rechten Seite. Die senkrechte Achse gibt den Strom mit einer Skalierung von - 50 Ampere an der unteren Seite bis + 50 Ampere an der oberen Seite des Diagramms wieder. Es ist hier sehr gut die gedämpfte Schwingung erkennbar. Man sieht hier auch nicht eine durch eine ohmsche Belastung hervorgerufene aperiodische Dämpfung. Vielmehr sinkt der Strom linear mit der Anzahl der Perioden ab, was darauf hindeutet, dass mit jeder Periode der Schwingung ein konstanter Energiebetrag aus dem Schwingkreis entnommen wird. Mit diesem Energiebetrag wird der Ladekondensator 82 schrittweise aufgeladen.

Figur 5 zeigt den Verlauf des Ausgangsstroms 54 des Leistungsgenerators bei der zweiten Messung. Auch hier ist die Zeit wie in Figur 4 von 0 - 1000 Mikrosekunden an der waagerechten Achse aufgetragen. An der senkrechten Achse ist der Strom durch den Resonanzkreis skaliert von - 10 Ampere am unteren Ende bis +15 Ampere am oberen Ende aufgetragen. Es ergibt sich hier eine Schwingung mit einer wesentlich niedrigeren Frequenz als bei der zuvor gemessenen ersten Kurve.

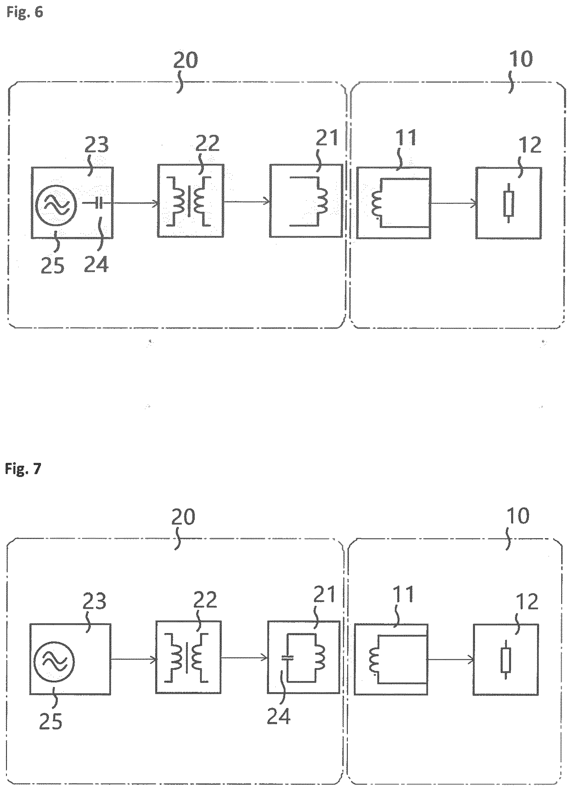

Figur 6 zeigt schematisch den Aufbau eines erfindungsgemäßen induktiven Leistungsübertragers, der vorzugsweise als Drehübertrager ausgebildet ist. Dieser Leistungsübertrager weist eine meist stationär angebrachte Primärseite 20 und eine meist beweglich beziehungsweise rotierend angebrachte Sekundärseite 10 auf. Selbstverständlich können auch Primärseite und Sekundärseite vertauscht werden, so dass Energie von der beweglichen Seite auf die feststehende bzw. stationäre Seite übertragen werden kann. Auf der hier beweglichen Sekundärseite befindet sich eine Sekundärwicklung des induktiven Leistungsübertragers, die ihre Energie an eine Last 12 abgibt. Diese Last kann beispielsweise die Röntgenröhre eines Computertomographen sein. Die Primärseite weist eine Primärseite 21 des Leistungsübertragers auf, welche von einem Leistungsgenerator 23 über einen Anpasstransformator 22 gespeist wird. Der Leistungsgenerator 23 hat einen Inverter 25 sowie einen Resonanzkondensator 24. Es könnten an Stelle des Resonanzkondensators am Ausgang des Inverters auch ein oder mehrere Kondensatoren in Serie mit einer beliebigen Induktivität der Schaltung angeordnet sein.

Figur 7 zeigt schematisch den Aufbau eines weiteren nicht erfindungsgemäßen induktiven Leistungsübertragers, der für einen Parallelresonanzbetrieb ausgelegt ist. Der Resonanzkondensator 24 ist hier beispielhaft parallel zur Primärseite 21 des Leistungsübertragers geschaltet. Grundsätzlich könnte ein Resonanzkondensator zur Erzeugung von Parallelresonanzen auch zu jeder anderen Induktivität parallel geschaltet sein. Es könnten auch mehrere Resonanzkondensatoren vorgesehen sein. Für einen kombinierten Betrieb mit Serien- bzw. Parallelresonanzen könnte auch wenigstens ein weiterer Resonanzkondensator in Serie geschaltet sein, wie dies beispielsweise in der vorhergehenden Figur dargestellt ist.

In Figur 8 ist noch schematisch der Aufbau eines Computertomographen mit einem erfindungsgemäßen induktiven Drehübertrager dargestellt. Der stationäre Teil des Drehübertragers ist in einem massiven Rahmen 110 aufgehängt. Der rotierende Teil der Gantry 109 ist gegenüber diesem drehbar gelagert und dreht sich in Drehrichtung 108. Dort befindet sich eine Röntgenröhre 101 die ein Röntgenstrahlenbündel 102 erzeugt, welches den auf einer Liege 107 liegenden Patienten 104 durchstrahlt und von einem Detektor 103 aufgefangen und in elektrische Signale umgewandelt wird. Zur Übertragung der elektrischen Energie aus einer Energieversorgungseinheit 111 ist eine induktive Leistungsübertragungsstrecke 100, auch induktiver Koppler mit einem induktiven Drehübertrager vorgesehen. Die Primärseite hier an dem stationären Teil und die Sekundärseite an dem rotierenden Teil angeordnet. Die von dem Detektor 103 ermittelten Daten werden an eine Auswerteeinheit 106 übertragen. Hierzu dient ein Steuerbus 105 mit dem auch von der Auswerteeinheit die Gantry selbst gesteuert werden kann.

In Figur 9 ist beispielhaft ein 3D-Kennlinienfeld dargestellt, mit welchem aus den zwei Resonanzfrequenzmessungen der richtige Wert für die Stellgröße (hier Schaltfrequenz) ermittelt wird. Das Kennlinienfeld wird einmalig an einem Referenzsystem durch gezielte Variation der Induktivitäten und Kapazitäten ermittelt. Es kann beispielsweise in einem nichtflüchtigen Speicher, z.B. einem Flash-Speicher eines DSP oder Mikrocontrollers abgelegt sein. Liegen von einem Seriengerät gemessene Werte für die Resonanzfrequenzen zwischen zwei Stützpunkten, so wird geeignet interpoliert, um einen möglichst kleinen Fehler zu erzielen. Die Achse 94 (Impulsfrequenz) zeigt die im ersten Abschnitt gemessene Frequenz in einem Bereich von 34 bis 44 Kilohertz. Die Achse 93 (Schwingfrequenz) zeigt die im zweiten Abschnitt gemessene Frequenz in einem Bereich von 15 bis 30 Kilohertz. Die Achse 95 (Stellfrequenz) zeigt die Ausgangsgröße, hier beispielhaft die Generatorfrequenz in einem Bereich von 30 bis 50 Kilohertz.

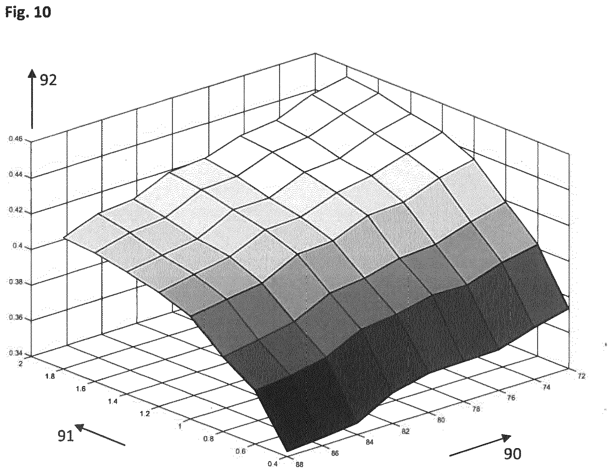

In Figur 10 ist beispielhaft ein 3D-Kennlinienfeld dargestellt, welches den Zusammenhang zwischen Luftspaltbreite 91, Resonanzkapazität 90 und der daraus ermittelten ersten Frequenz 92. Die Achse 91 zeigt die Breite des Luftspaltes in einem Bereich von 0.4 mm bis 2.0 mm. Die Achse 90 zeigt die Resonanzkapazität in einem Bereich von 72 bis 88 Nanofarad. Die Achse 92 zeigt die im ersten Abschnitt gemessene erste Frequenz in einem Bereich von 34 bis 46 Kilohertz.

### Bezugszeichenliste

- 10: Bewegliche Seite
- 11: Sekundärseite des Leistungsübertragers
- 12: Last
- 20: Stationäre Seite
- 21: Primärseite des Leistungsübertragers
- 22: Anpasstransformator
- 23: Leistungsgenerator
- 24: Resonanzkondensator
- 25: Inverter
- 50: Leistungsgenerator
- 51: Leistungsschalter
- 52: Resonanzkondensator
- 53: Kurzschluss
- 54: Ausgangsstrom des Leistungsgenerators
- 55: Ausgangsspannung des Leistungsgenerators
- 60: Ersatzschaltbild des Anpasstransformators
- 61: Erste Serieninduktivität des Ersatzschaltbilds des Anpasstransformators
- 62: Erste Parallelinduktivität des Ersatzschaltbilds des Anpasstransformators
- 63: Zweite Parallelinduktivität des Ersatzschaltbilds des Anpasstransformators
- 64: Zweite Serieninduktivität des Ersatzschaltbilds des Anpasstransformators
- 70: Ersatzschaltbild des induktiven Drehübertragers
- 71: Erste Serieninduktivität des Ersatzschaltbilds des induktiven Drehübertragers
- 72: Erste Parallelinduktivität des Ersatzschaltbilds des induktiven Drehübertragers
- 73: Zweite Parallelinduktivität des Ersatzschaltbilds des induktiven Drehübertragers
- 74: Zweite Serieninduktivität des Ersatzschaltbilds des induktiven Drehübertragers
- 75: Drehspalt
- 80: Lastschaltung
- 81: Gleichrichter
- 82: Ladekondensator
- 83: Lastwiderstand bei Nennlast
- 84: Lastwiderstand zur Messung
- 90: Resonanzkapazität
- 91: Luftspaltbreite
- 92: Impulsfrequenz
- 93: Schwingfrequenz
- 94: Impulsfrequenz
- 95: Stellfrequenz
- 100: Induktiver Leistungsübertrager
- 101: Röntgenröhre
- 102: Röntgenstrahlenbündel
- 103: Detektor
- 104: Patient
- 105: Steuerbus
- 106: Auswerteeinheit
- 107: Liege
- 108: Drehrichtung
- 109: Rotierender Teil der Gantry
- 110: Stationärer Rahmen der Gantry

## Patentansprüche

1. Verfahren zur Kompensation der Toleranzen elektrischer Bauelemente eines induktiven Drehübertragers (100) umfassend einen Leistungsgenerator (23) zur Erzeugung eines gepulsten Gleichspannung oder einer Wechselspannung, die in einen Serienresonanzkreis mit wenigstens einem Resonanzkondensator (24) und einem induktiven Leistungsübertrager (11, 21) zur Speisung einer Last (12) über einen Gleichrichter (81) und einen Ladekondensator (82) eingekoppelt wird, umfassend die folgenden Schritte:
a) Erzeugen einer kurzen Sequenz aus mindestens einem Puls einer Gleichspannung oder einer Periode einer Wechselspannung, wobei durch den Gleichrichter (81) ein Strom in den Ladekondensator (82) eingebracht und dieser dadurch aufgeladen wird;
b) Kurzschließen des Serienresonanzkreises;
c) Messung der Frequenz der sich im Serienresonanzkreis ergebenden Schwingung mit einer ersten Frequenz;
d) Erzeugung einer längeren Sequenz mit mehreren Pulsen einer Gleichspannung oder mehreren Perioden einer Wechselspannung, zur Aufladung des Ladekondensators, wobei eine oder mehrere Gleichrichterdioden der Gleichrichterschaltung (81) im Schritt f) in einem gesperrten Zustand bleiben und somit kein Resonanzstrom mehr durch den ausgangsseitigen Kreis aus der Sekundärwicklung des induktiven Drehübertragers fließt;
e) Kurzschließen des Serienresonanzkreises;
f) Messung der Frequenz der sich im Serienresonanzkreis ergebenden Schwingung mit einer zweiten Frequenz;
g) Ermittlung eines Steuerparameters zur Steuerung des Leistungsgenerators durch Berechnung, Abschätzung oder anhand einer Wertetabelle aus den in den Schritten c und f gemessenen Frequenzen wobei durch eine primärseitige Steuerung des Leistungsgenerators die Ausgangsspannung unabhängig von mechanischen und elektrischen Toleranzen der elektrischen Bauteile näherungsweise konstant gehalten werden kann.

2. Verfahren nach einem der vorhergehenden Ansprüche,
**dadurch gekennzeichnet, dass**
zwischen dem Leistungsgenerator und dem einem induktiven Drehübertrager (100) ein Anpasstransformator vorgesehen ist.

3. Verfahren nach einem der vorhergehenden Ansprüche,
**dadurch gekennzeichnet, dass**
eine Messreihe umfassend die Schritte a bis f durchgeführt wird, durch die eine Wertetabelle ermittelt wird, wobei die Wertetabelle vorzugsweise in einem nichtflüchtigen Speicher abgespeichert wird, und die Wertetabelle später in Schritt g genutzt wird.

4. Verfahren nach einem der vorhergehenden Ansprüche,
**dadurch gekennzeichnet, dass**
ein Fehlersignal ausgegeben wird, wenn die erste Frequenz und/oder zweite Frequenz ausserhalb vorgegebener Wertebereiche liegen.

5. Induktiver Drehübertrager (100) mit einer Steuereinrichtung zur Durchführung eines Verfahrens nach Anspruch 1.

6. Computertomograph mit einem Induktiven Drehübertrager (100) und einer Steuereinheit um ein Verfahren nach Anspruch 1 durchzuführen.

7. Computertomograph mit einem Induktiven Drehübertrager (100) nach Anspruch 5.

## Claims

1. A method for compensating tolerances of electrical components of an inductive rotary joint (100) comprising a power generator (23) for generating a pulsed DC voltage or an AC voltage, which is coupled in a series resonance circuit with at least a resonance capacitor (24) and an inductive power transmitter (11, 21) for feeding a load (12) via a rectifier (81) and a charging capacitor (82), comprising the following steps:
a) generating a short sequence of at least one pulse of DC voltage or a period of an AC voltage, wherein a current is fed into the charging capacitor (82) by the rectifier (81), thereby loading said charging capacitor (82);
b) short-circuiting the series resonance circuit;
c) measuring the frequency of the oscillation with a first frequency resulting in the series resonance circuit;
d) generating a longer sequence having a plurality of pulses of a DC voltage or a plurality of periods of an AC voltage, for charging the charging capacitor, wherein one or more rectifier diodes of the rectifier circuit (81) in step f) rest in a blocked state and thus no more resonance current flows through the output-side circuit of the secondary winding of the inductive rotary joint;
e) short-circuiting of the series resonance circuit;
f) measuring the frequency of the oscillation with a second frequency resulting in the series resonance circuit;
g) detecting a control parameter for controlling the power generator by calculating, estimating or by means of a value table of the frequencies measured of the steps c and f, wherein the output voltage can be kept approximately constant by means of a primary side controlling, independently of mechanical and electrical tolerances of the electrical components.

2. Method according to one of the preceding claims,
**characterized in that**
an adjusting transformer is provided between the power generator and an inductive rotary joint (100).

3. Method according to one of the preceding claims,
**characterized in that**
a measuring sequence comprising steps a to f is performed, by which a value table is established, wherein the value table is preferably stored in a non-volatile memory, and the value table is used later in step g.

4. Method according to one of the preceding claims,
**characterized in that**
an error signal is output, if the first frequency and/or second frequency are/is beyond predetermined value ranges.

5. Inductive rotary joint (100) with a control device for performing a method according to claim 1.

6. Computer tomograph with an inductive rotary joint (100) and a control device for performing a method according to claim 1.

7. Computer tomograph with an inductive rotary joint (100) according to claim 5.

## Revendications

1. Procédé de compensation des tolérances de composants électriques d'un transmetteur rotatif inductif (100) comprenant un générateur de puissance (23) pour générer une tension continue pulsée ou une tension alternative qui est couplée dans un circuit résonant série comportant au moins un condensateur de résonance (24) et un transmetteur de puissance inductif (11, 21) pour alimenter une charge (12) par l'intermédiaire d'un redresseur (81) et d'un condensateur de charge (82), comprenant les étapes suivantes consistant à :
a) générer une séquence courte constituée d'au moins une impulsion d'une tension continue ou une période d'une tension alternative, dans laquelle un courant est introduit dans le condensateur de charge (82) à travers le redresseur (81) et ledit condensateur de charge est ainsi chargé ;
b) court-circuiter le circuit résonant série ;
c) mesurer la fréquence de l'oscillation se produisant dans le circuit résonant série à une première fréquence ;
d) générer une séquence plus longue avec plusieurs impulsions d'une tension continue ou plusieurs périodes d'une tension alternative pour charger le condensateur de charge, dans laquelle une ou plusieurs diodes redresseuses du circuit redresseur (81) restent dans un état bloqué à l'étape f) et donc aucun courant de résonance ne circule plus dans le circuit côté sortie à partir de l'enroulement secondaire du transmetteur rotatif inductif ;
e) court-circuiter le circuit résonant série ;
f) mesurer la fréquence de l'oscillation se produisant dans le circuit résonant série à une seconde fréquence ;
g) déterminer un paramètre de commande pour commander le générateur de puissance par calcul, estimation ou sur la base d'un tableau de valeurs à partir des fréquences mesurées aux étapes c et f, la tension de sortie pouvant être maintenue approximativement constante indépendamment des tolérances mécaniques et électriques des composants électriques par commande côté primaire du générateur de puissance.

2. Procédé selon la revendication 1,
**caractérisé en ce**
**qu'**un transformateur d'adaptation est prévu entre le générateur de puissance et le transmetteur rotatif inductif (100) .

3. Procédé selon l'une des revendications précédentes,
**caractérisé en ce**
**qu'**on effectue une série de mesures comprenant les étapes a à f, au moyen desquelles on détermine un tableau de valeurs, le tableau de valeurs étant de préférence mémorisé dans une mémoire non volatile et le tableau de valeurs étant utilisé plus tard à l'étape g.

4. Procédé selon l'une des revendications précédentes,
**caractérisé en ce**
**qu'**un signal d'erreur est émis si la première fréquence et/ou la seconde fréquence se situent en dehors de plages de valeurs prédéfinies.

5. Transmetteur rotatif inductif (100) comportant un dispositif de commande pour mettre en œuvre un procédé selon la revendication 1.

6. Tomodensitomètre comportant un transmetteur rotatif inductif (100) et une unité de commande pour mettre en œuvre un procédé selon la revendication 1.

7. Tomodensitomètre comportant un transmetteur rotatif inductif (100) selon la revendication 5.
